# EUROPEAN PATENT APPLICATION

(11) **EP 1 416 436 A2**
(43) Date of publication of application: **06.05.2004**
(21) Application number: 03256816.4
(22) Date of filing: 28.10.2003
(51) Int. Cl.: G06K 19/077

(54) **Article management method and system, noncontact electronic tag and computer-readable medium**

(30) Priority: 29.10.2002 JP 2002313992
(71) Applicant: Omron Corporation, Kyoto-shi, Kyoto 600-8530 (JP)
(72) Inventor: Fukuoka, Shinichiro Omron Corporation, Shimogyo-ku, Kyoto-shi Kyoto 600-8530 (JP)
(74) Representative: Calderbank, Thomas Roger

(57) **Abstract**

In an article management system, a noncontact electronic tag storing tag data is attached to an article managed in a management area, a passage radio communication unit that can communicate with the noncontact electronic tag is installed in a passage section leading to the management area, and the passage radio communication unit communicates with the noncontact electronic tag to the article passing through the passage section. The tag data stored in the noncontact electronic tag can be read in tag access processing that can be executed by the passage radio communication unit.

## Description

This invention relates to an article management system, a noncontact electronic tag, an article management method, and a computer-readable medium storing instructions of operating the article management system, e.g. intended for attaching a noncontact electronic tag to an article in facilities for management, such as book stock management in a library, article management of DVDs, CDs, software packages, clothing articles, foods, etc. sold in stores, or article management of rental articles of DVDs, videotape, CDs, etc., rented in rental shops.

Hitherto, an RF-ID system has been available for sticking an RF-ID tag on a book in a library of a management area, for example, and managing the shelf on which the book exists and the lending record of the book. (For example, refer to International Patent Publication No. 2002-522849 and International Patent Publication No. 2002-522857)

In such an RF-ID system, the RF-ID tag attached to the book is read through a reader for use to keep track of the shelf on which the book is stored and manage the lending record of the book. The reader can communicate with a plurality of RF-ID tags and can read RF-ID tags with the books piled.

On the other hand, to lend a book, the EAS data of the RF-ID tag is changed from "1" to "0" for placing the RF-ID tag in a state in which it does not respond. Accordingly, an EAS system in the library is implemented. If a person attempts to go out through an exit (passage to the inside of the library) with the book to which the RF-ID tag is attached for which lending processing is not complete, the EAS apparatus at the exit detects it and makes a notification with a buzzer, a lamp, etc.

However, the EAS apparatus described above detects only whether or not the RF-ID tag makes a response and if the RF-ID tag makes a response, the EAS apparatus simply makes a notification and thus may make an erroneous notification.

If a book to which an RF-ID tag is attached for which lending processing is not complete is taken out from the library, whichbook is taken out cannot be detected. Thus, when a library user leaves the library in a hurry without undergoing lending processing and takes out a book illegally without becoming aware of taking out the book, if an official in charge cannot stop the library user before the library user leaves the library, it becomes necessary to read the RF-ID tags attached to all books in the library to identify which book is taken out.

Further, an official in charge who comes to the library in the morning must perform return processing for the books returned into a return box in the closing hours of the library and set the RF-ID tags to non-lending; much time is taken.

It is therefore a preferred object of the invention to provide an article management system, a noncontact electronic tag, an article management method, and/or a computer/readable medium storing instructions of operating the article management system, for making it possible to read tag data stored in a noncontact electronic tag of an article passing through a passage section leading to a management area, e.g. for enhancing accuracy of article management in the management area and improving work efficiency.

According to the invention, there is provided an article management system wherein a noncontact electronic tag storing tag data is attached to an article to be managed in a management area, the system comprising:
a passage radio communication unit disposed in a passage section leading to the management area, the passage radio communication unit communicating with the noncontact electronic tag attached to the article passing through the passage section, and executing tag access processing to read the tag data stored in the noncontact electronic tag.

The management area may include an area in which both or either of taking out and carrying in of articles is managed in facilities of a library, a store, etc.

The articles may include books, CDs, videotape, DVDs, software packages, clothing articles, foods, etc.

The tag data may include the data stored in a storage unit installed in the noncontact electronic tag, and the storage unit includes nonvolatile memory of EEPROM, FRAM, flash memory, etc.

The tag data may be article-unique data capable of identifying each article, and includes data made up of both or either of unique ID given for each noncontact electronic tag and article data.

The article data may include
data made up of a title, an author, a translator, an editor, a publisher, a price, a table of contents, content, extract of content, etc., if the article is a book;
data made up of a title, an artist name, title of musical composition, words, a musical score, apublisher, aprice, etc., if the article is a DVD (or videotape of musician or DVD);
data made up of a title, casting, a director name, synopsis, covered language, covered systems (stereo sound, etc.,), a price, etc., if the article is videotape or a DVD (movie, etc.,);
data made up of a product name, content, functions, recommended machine specifications, compatible OS, a publisher, a price, etc., if the article is a software package;
data made up of an article name, a brand, a product name, a size, type (jacket, pants, skirt, nit, shirt, etc.,), material, washing data (iron, manual washing, etc.,), a price, etc., if the article is a clothing article;
data made up of product name, kind, production place, best-before date, a price, etc., if the article is foods.

Preferably, the noncontact electronic tag includes a noncontact electronic tag of an IC tag (RF-ID tag, RF tag), an ID tag, etc., and includes the form of a card, a stick, a coin, etc.

The passage section may include both or either of an exit and an entrance through which a person passes, the proximity of both or either of the exit and the entrance, or a path through which an article passes (for example, the proximity of a return slot for returning a book, the proximity of an entrance or exit for carrying in or out an article, etc.,).

The passage radio communication unit may include a radio communication unit that can conduct radio communications with the noncontact electronic tag, such as radio communication unit for producing a magnetic field at an antenna and communicating with an IC tag. The passage radio communication unit includes a communication section of an antenna, etc., at one point or more of a side, an upper part, or a lower part of the passage section and includes in both side parts or upper and lower parts.

The tag access processing may be processing of accessing a noncontact electronic tag and includes access processing of transmitting an interrogation signal to a noncontact electronic tag and receiving a response signal from the noncontact electronic tag, multiple tag access processing of transmitting an interrogation signal to a plurality of noncontact electronic tags and receiving a response signal while reliably circumventing a collision, or simple tag access processing of transmitting an interrogation signal to a plurality of noncontact electronic tags and receiving a response signalwhile circumventing a collision to some extent.

As a preferred embodiment, the tag access processing that can be executed by the passage radio communication unit can be made up of interrogation communication processing and repetitive processing. The interrogation communication processing is for setting a part of predetermined data stored in the noncontact electronic tag as reference for determining a response timing for causing the noncontact electronic tag to transmit response data and transmitting specification data specifying the part of the predetermined data. The repetitive processing is for changing a specification position in the specification data and again executing the interrogation communication processing when one piece of response data transmitted from a plurality of noncontact electronic tags at the same response timing and received by the passage radio communication unit collides with another.

The part of the predetermined data includes data made up of a part of the unique ID given to the noncontact electronic tag, a part of the article data, and a part of the data stored in the noncontact electronic tag.

The interrogation communication processing may include processing of transmitting a command defining processing to be executed by the noncontact electronic tag and necessary data such as unique ID for limiting the noncontact electronic tag for making a response, AFI (application family identifier), or mask data (mask length and mask value).

Preferably, the response data includes data requested in the interrogation communication processing, such as the unique data or the article data.

The response timing may include the time until the noncontact electronic tag receiving the interrogation starts response communications.

Determining the response timing based on the reference may include determining based on the time resulting from multiplying a numeric value of the part of the predetermined data by a predetermined time (or performing arithmetic operation of addition, subtraction, or division thereon) or adopting the numeric value itself as time in predetermined units and determining (for example, 0.3 sec if the numeric value is 3) .

The specification data may include the start position of the part of the predetermined data and the adopted length or the block position for specifying the part of the predetermined data in block units. Changing the specification position may include changing the start position and may include moving one constant amount (for example, constant number of bits) at a time such as moving one adopted length at a time or moving independently of the adopted length for changing the position.

Preferably, the collision refers to a phenomenon in which the response timings of two or more noncontact electronic tags overlap and response data cannot be read because of interference, overlap, etc., of response data.

As another preferred embodiment, a limitation condition can be set for terminating repetition of the repetitive processing regardless of whether or not collision avoidance is accomplished.

The limitation condition may include a predetermined number of times wherein the part of the predetermined data adopted does not exceed the end of the predetermined data, such as the number of times until the part of the predetermined data adopted becomes the end of the predetermined data (for example, unique ID) or the number of times independent of such the number of times, and may include a predetermined condition as to whether or not processing is executed to the end of unique IDs.

As another preferred embodiment, the noncontact electronic tag can store inhibition detection-possible data indicating permission or inhibition of passage through the passage section, and the passage radio communication unit can execute the tag access processing when the passage radio communication unit detects the noncontact electronic tag attached to the article whose inhibition detection-possible data indicates inhibition of passage through the passage section (conditional processing).

The inhibition detection-possible data may include classification data (for example, AFI data) storing permission or inhibition of passage by classification based on a numeric value, etc., or response/no response data (for example, EAS data) storing response or no response as 0 or 1.

The conditional processing may include branch processing determining subsequent processing depending on a condition (for example, if statement in programming language).

As another preferred embodiment, the article management system can further comprise a user radio electronic medium capable of identifying each user and storing user data, the user radio electronic medium communicating with the passage radio communication unit, wherein the passage radio communication unit is set to receive the user data from the user radio electronic medium the user having the article passed though the passage section (user identification processing).

The user radio electronic medium may include a noncontact electronic tag of an IC tag (RF-ID tag, RF tag), an ID tag, etc., and includes the form of a card, a stick, a coin, etc. Considering the convenience of the user for carrying the medium, it is desirable that the user radio electronic medium should be formed as a card of the same size as a cash card, etc. To distinguish from the noncontact electronic tag attached to an article, medium classification data indicating that the medium is used for the user may be stored.

The user data includes data concerning the user, such as the user ID given to the user, the name, address, telephone number, FAX number, e-mail address, user registration date, etc., of the user.

According to the invention, there can be provided a noncontact electronic tag storing inhibition detection-possible data for making it possible to detect inhibition of passage through the passage section as an application family identifier.

According to the invention, there can be provided a computer-readable medium storing instructions of operating the article management system. The processing executed in the article management system to operate the article management system may include the tag access processing, the interrogation communication processing, the repetitive processing, the conditional processing, or the user identification processing described above.

The computer-readable medium may be a CD-ROM, a DVD-ROM a DVD-RAM, an MO (magnetic optical) disk, a flexible disk, or a hard disk.

According to the invention, the noncontact electronic tag attached to both or either of an article carried out (taken out) from the management area and an article carried in (taken into) the management area can be read and the article can be precisely managed reliably synchronizing the article in the management area with the data managed in a personal computer, etc. Thus, for example, if the books in a library are managed, the books existing in the library can always be grasped and the inconvenience on the administration requiring re-inspection because of illegal taking out can be decreased.

Even in a facility requiring both or either of lending processing (sold processing in a shop) and return processing (stocked article registration processing) on a counter of a library, etc., a taken-out or taken-in article can be identified in a passage, so that both or either of the lending job on the counter (sold job) and the return job (stocked article registration job) can be decreased. In this case, for example, if the number of taken-out books is limited in a library, etc., when books are taken out exceeding the limited number, a notification may be made with a buzzer, a lamp, etc., and it is made possible for even a guard to take steps.

A plurality of noncontact electronic tags can be caused to make a response at different response timings. If the response timings overlap, the response timings can be changed for causing the noncontact electronic tags to again make a response. Accordingly, the passage radio communication unit can read the response data of the noncontact electronic tags.

The processing time can be shortened for reading the response data of the noncontact electronic tags at high speed. Accordingly, if a person runs through the passage with articles, the response data of the noncontact electronic tags can be read.

Only the noncontact electronic tag attached to the article whose passage is inhibited can be caused to transmit response data, and it is made possible to circumvent acquisition of unnecessary response data or acquire necessary data at higher speed.

Preferably, it is also made possible to identify the user who takes in or out an article.

Preferably, it is also made possible to install the program defining processing executed in the article management system in an article management system in a related art for execution, via such as computer-readable medium.

Accordingly, the articles in the management area may be managed precisely and efficiently, improvement in job efficiency and reduction in cost accompanying it can be accomplished, and the satisfaction level of the users of the article management system (for example, employer and employees of a facility or chief librarian and officials in charge) can be enhanced.
FIG. 1 is a drawing showing the system configuration of a book management system;
FIG. 2 is a fragmentary sectional view of the right side in the proximity of a return slot;
FIG. 3 is a plan view of an RF tag;
FIG. 4 is a circuit block diagram showing the circuit configuration of the book management system;
FIG. 5 is a circuit block diagram showing the circuit configuration of the RF tag;
FIGS. 6A-D are schematic representations to describe storage areas in memory in an IC chip;
FIGS. 7A-7C are schematic representations to describe data storage when an interrogator reads UID;
FIGS. 8A-8C are schematic representations showing command data;
FIGS. 9A-9C schematic representations showing command data;
FIG. 10 is a flowchart of multiple tag access processing;
FIG. 11 is a schematic representation to describe response data collision;
FIGS. 12A-12C are schematic representations to describe the relationship between UID and time slot in response processing;
FIG. 13 is a flowchart of lending processing;
FIG. 14 is a flowchart of gate processing;
FIG. 15 is a flowchart of return processing;
FIG. 16 is a flowchart of book stock inspection processing;
FIG. 17 is a schematic representation of command data;
FIG. 18 is a flowchart of simple tag access processing; and
FIGS. 19A-19C are schematic representations to describe response data collision.

Referringnow to the accompanying drawings, there is shown one preferred embodiment of the invention.

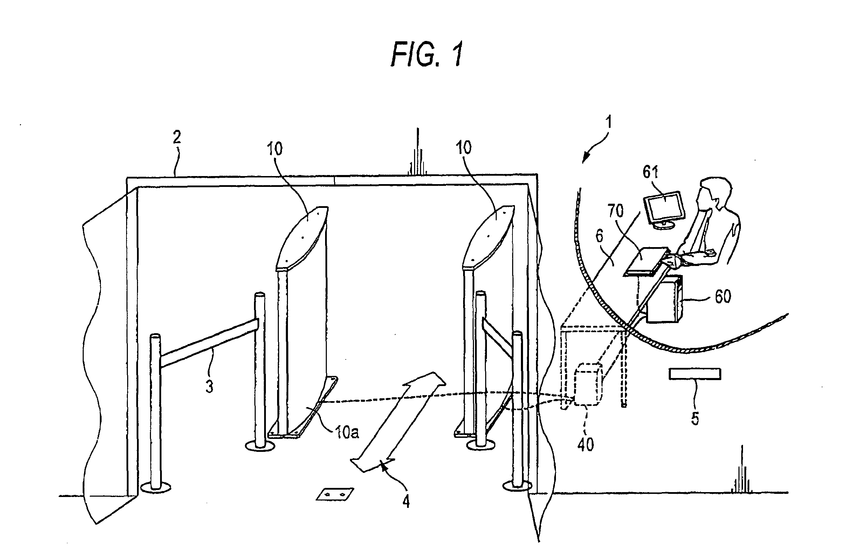

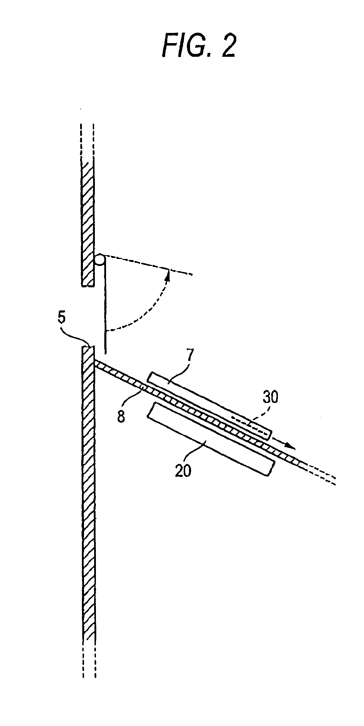

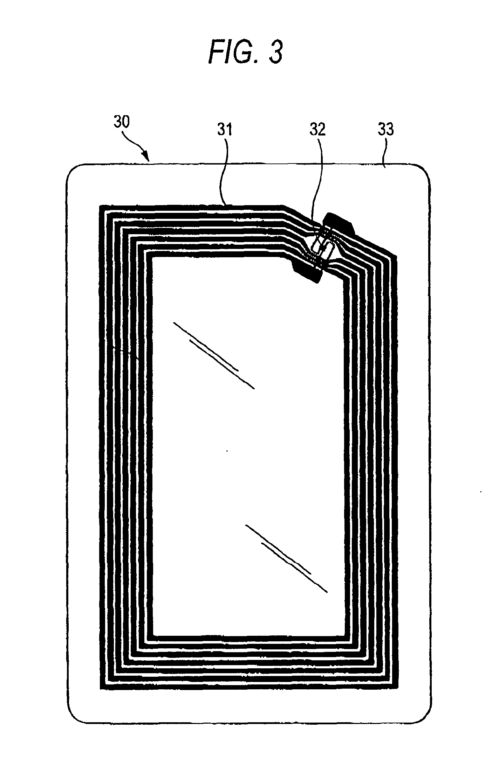

The embodiment is an embodiment used for book management of a library. To begin with, the system configuration of a book management system 1 will be discussed with FIG. 1, which is a drawing showing the system configuration of the book management system 1, FIG. 2, which is a fragmentary sectional view of the right side in the proximity of a return slot 5, and FIG. 3, which is a plan view of an RF tag 30.

In the book management system 1, an RF tag 30 shown in FIG. 3 is previously stuck on the inside of the back cover of a book or between the jacket of the book and the back cover with an adhesive, etc., and the book on which the RF tag 30 is stuck is stored on a bookshelf. The RF tag 30 includes an antenna coil 31 provided by forming a copper wire like a coil and an IC chip 32 on which data storage memory and necessary circuitry are integrated, and the surface and back thereof are sandwiched between rectangular transparent sheets 33 for protection.

Each book on which the RF tag 30 is thus stuck is managed in a management area that can be entered by the user in the library. That is, the books existing in areas wherein the user can move with a book, such as shelves on which the books are stored so that the user can read the books, a reading room provided for the user to read the books, and a copy room for enabling the user to copy the books are under the management of the library. If one of the books is taken out through a passage 4 (FIG. 1) from the management area because of lending, etc., it becomes a book outside the management area, not existing in the library.

The book management system 1 includes exit interrogators 10 and 10, a communication controller 40, andahost (forexample, implemented as a personal computer) 60. The exit interrogators 10 and 10 communicate with the RF tag 30. The communication controller 40 transmits and receives a signal to and from the exit interrogators 10 and 10. The host 60 receives data recorded on the RF tag 30 from the communication controller 40 and executes management as to which shelf a book 7 is stored on, etc., as shown in FIG. 1.

A return interrogator 20 installed in the return slot 5 formed in the outer wall of the library and a lending interrogator 70 installed on a lending counter 6 are connected to the host 60 through an appropriate communication controller 40 (not shown) like the exit interrogators 10 and 10.

The exit interrogators 10 and 10 are placed on both sides of the passage 4 to the management area of the book 7 at an exit 2 a little inside the library with communication faces 10a and 10a (right communication face not shown) opposed to each other. All space between the communication faces 10a and 10a is the communication-possible range and if the RF tag 30 passes through at any position in the passage 4, communications are possible.

The exit interrogator 10, 10 has the appearance formed at the height as high as the height of an average person and the width as wide as a width with several average persons standing side by side. The exit interrogator 10 is bent so that the center of the communication face 10a becomes convex on the plan view to the passage 4 side. To the inside of the exit interrogator 10, an antenna 16 (described later) is attached so as to form a loop viewed from the communication face 10a; a single coil is formed.

In the space between the exit interrogator 10, 10 and the exit 2, an off-limits rope 3 is placed so that the user does not pass through.

The return interrogator 20 is installed inside the return slot 5 formed in the outer wall of the library (inside the facility), as shown in FIG. 2, which is a fragmentary sectional view of the right side. When the book 7 is returned through the return slot 5, it slides down over a slope 8 and meanwhile the return interrogator 20 communicates with the book 7 for reading data. Even if a plurality of books 7 are returned through the return slot 5 in a stroke, the data stored on each book 7 can be acquired as tag access processing (simple tag access processing or multiple tag access processing) described later is performed.

According to the described configuration, the.passage through which the RF tag 30 attached to the book 7 passes becomes the passage 4 and the return slot 5, and the book 7 in the library inside the passage 4 and the return slot 5 can bemanaged reliably.

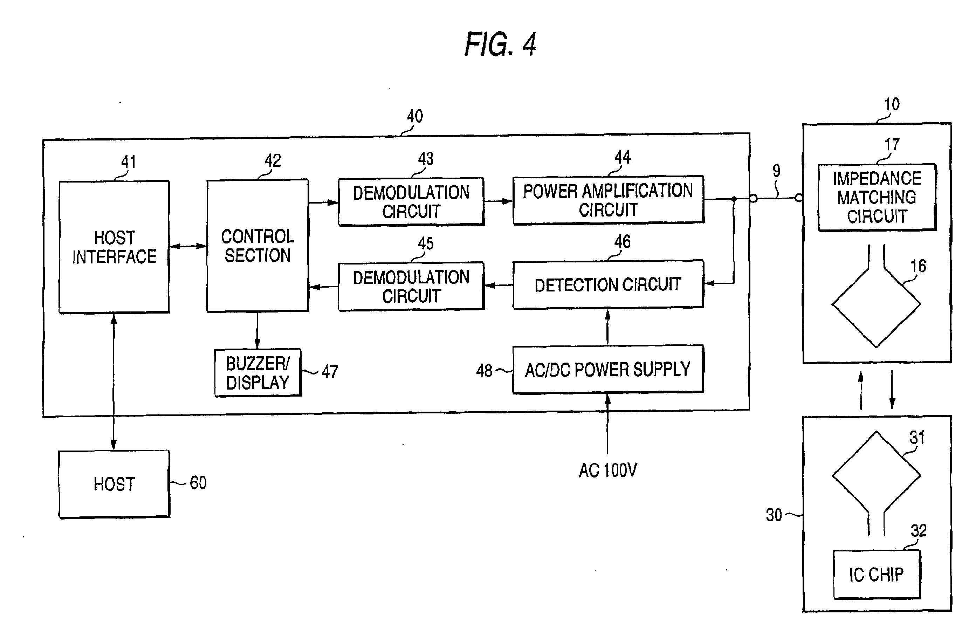

Next, the circuit configuration of the book management system 1 will be discussed with FIG. 4, which is a circuit block diagram.

The communication controller 40 includes a control section 42 including a CPU (central processing unit), ROM (read-only memory), and RAM (randomaccessmemory) forexecuting various types of control processing. A host interface 41 is connected to the control section 42 for enabling the control section 42 to communicate with the host 60 connected to the host interface 41. Accordingly, the control section 42 executes communication control with the RF tag 30 in accordance with a control instruction from the host 60.

The ROM stores a multiple tag access program defining multiple tag access processing or a simple tag access program defining simple tag access processing (described later) and a gate program defining gate processing.

This is applied to the communication controller 40 connected to the exit interrogator 10; in the communication controller 40 connected to the lending interrogator 70, the multiple tag access program or the simple tag access program and a lending program defining lending processing are stored.

Likewise, in a communication controller 40 connected to the return interrogator 20, the multiple tag access program or the simple tag access program and a return program defining return processing are stored.

Likewise, in a communication controller 40 connected to a hand scanner (not shown), the multiple tag access program or the simple tag access program and a book stock inspection program defining book stock inspection processing are stored.

The control section 42 transmits a digital signal to a modulation circuit (modulation unit) 43. The modulation circuit 43 modulates the digital signal into an analog signal and outputs the analog signal to a power amplification circuit 44, which then amplifies the analog signal and transmits the amplified analog signal to the exit interrogator 10 via a coaxial cable 9.

An impedance matching circuit 17 of the exit interrogator 10 receiving the analog signal stabilizes power and transmits the analog signal (command) to the antenna 16.

At this time, the antenna coil 31 of the RF tag 30 is affected by a magnetic field produced at the antenna 16, and the IC chip 32 obtains an electromotive force and transmits recorded IC data from the antenna coil 31 as a data signal (response).

The IC chip 32 includes a power supply circuit (power supplyunit), anA/Dconverter (modulation unit) , aD/Aconverter (demodulation unit), a logic circuit (logic unit or control unit such as a CPU), and nonvolatile memory (storage unit). The nonvolatile memory stores the ID uniquely assigned to the RF tag 30 (UID) and predetermined data such as book data of the title, the author, etc., of the book 7 on which the RF tag 30 is stuck. The nonvolatile memory specifically can be implemented as FRAM or EEPROM.

The antenna 16 of the exit interrogator 10 receives the data signal and transmits the data signal via the impedance matching circuit 17 and the coaxial cable 9 to the communication controller 40. The antenna 16 is formed of an iron wire having a proper thickness and is configured so as to a little generate heat as power is supplied and radiate heat from the external facing of the exit interrogator 10 such as the communication face 10a. As such a metal member having a high resistance value is used, it is made possible to lessen the resistance value of the resistor included in the impedance matching circuit 17, suppressing heat generation of the resistor.

In the communication controller 40 receiving the data signal, the data signal is detected by a detection circuit (detection unit) 46 and the data signal is demodulated into digital data by a demodulation circuit (demodulation unit) 45 to provide IC data and the IC data is transmitted to the control section 42.

The control section 42 uses a buzzer/display section 47 to inform the user that the IC data has been received. That is, a buzzer sound is produced from a loudspeaker of the buzzer/display section 47 and an LED of the buzzer/display section 47 is lighted for a predetermined time.

The control section 42 transmits the IC data to the host 60 through the host interface 41.

Power for driving the communication controller 40 is acquired through an AC/DC power supply (power supply unit) 48 from commercial power supply 100 VAC.

The described circuit configuration makes it possible for the RF tag 30 to transmit a response signal (response) in response to an interrogation signal (command) transmitted by the exit interrogator 10 for conducting communications between the antenna 16 of the exit interrogator 10 and the antenna coil 31 of the RF tag 30.

Accordingly, communicating with the RF tag 30, tag data can be acquired indicating whether or not it is the RF tag 30 attached to the book for which lending processing is complete. If lending processing is not complete, an official in charge is informed through the buzzer/display section 47. Therefore, the official in charge knows that the user illegally takes out the book not following the rule, namely, takes out the book forgetting to conduct lending processing, and can request the user to conduct lending processing at the lending counter 6. To warn the user of illegal takeout, a message of "please conduct lending processing" may be given to the user by automatic voice.

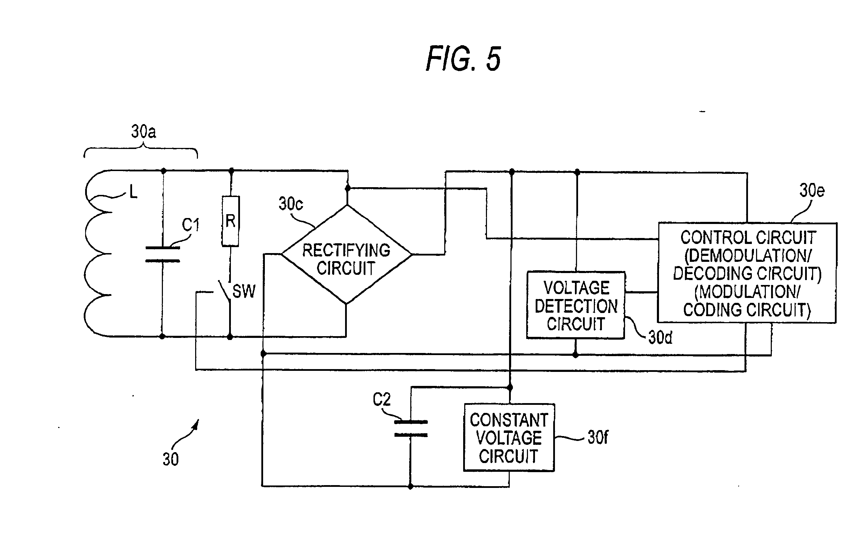

Next, the circuit configuration of the RF tag 30 will be discussed with FIG. 5, which is a circuit block diagram.

The RF tag 30 includes a parallel resonance circuit 30a made up of a coil L (the above-mentioned antenna coil 31) and a resonance capacitor C1, a switch SW, an operation resistor R, a rectifying circuit 30c, a voltage detection circuit 30d, a control circuit 30e, a constant voltage circuit 30f, and a smoothing capacitor C2.

The rectifying circuit 30c outputs a DC component (result of rectification) responsive to the coupling degree of the RF tag 30 and an antenna (not shown) of the interrogator (exit interrogator 10, return interrogator 20, etc.,).

When the RF tag 30 enters the interrogator communication area and a predetermined voltage is reached, the voltage detection circuit 30d detects it and produces detection output for placing the control circuit 30e in a state in which the control circuit 30e can perform essential operation such as access to the interrogator.

The control circuit 30e includes a demodulation/decoding circuit and a modulation/coding circuit. It demodulates various commands received through the coil L from the interrogator by the demodulation/decoding circuit and executes processing based on the provided commands.

The control circuit 30e executes processing based on a command; for example, it executes processing of collating received UID with UID stored in nonvolatile memory (not shown) and if they match, modulating the UID by the modulation/coding circuit and transmitting the provided UID through the coil L to the interrogator.

The constant voltage circuit 30f stabilizes the current of the DC component smoothed by the smoothing capacitor C2.

According to the described configuration, the RF tag 30 can receive a command through the coil L from the interrogator, can perform processing based on the command by the control circuit 30e, and can respond to the interrogator again through the coil L.

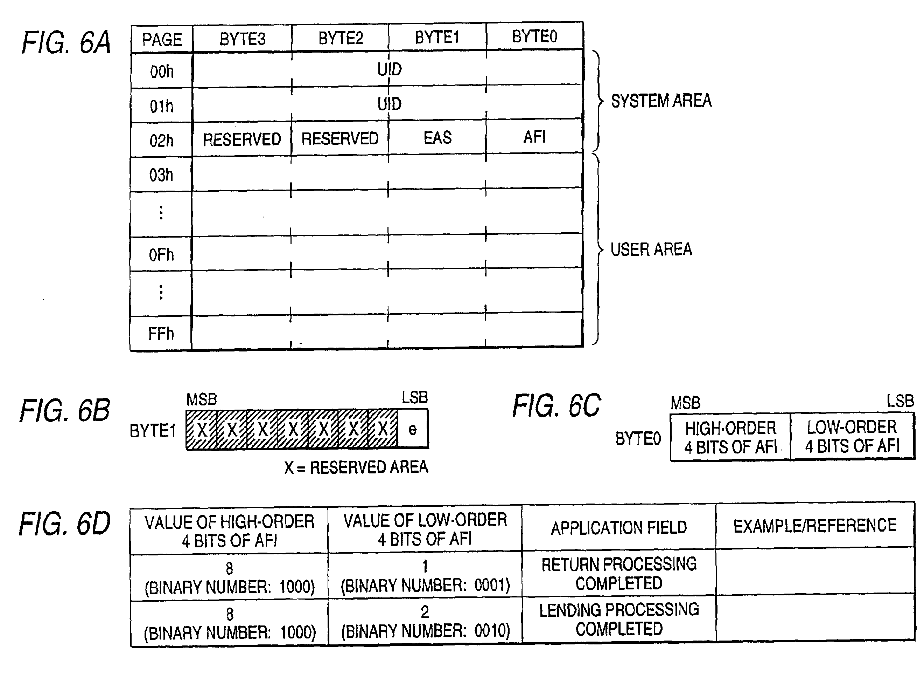

Next, definition of a storage area in the memory in the IC chip 32 will be discussed with FIGS. 6A-6D, which is a schematic representation of memory contents.

FIG. 6A indicates data stored in the memory; page numbers are assigned every four pages (one byte is eight bits). The first 12 bytes of the memory are used as a system area.

In the system area, UID (unique identifier) is stored in eight bytes from the beginning of page number 00h to the end of page number 01h, AFI (application family identifier) is stored in the following one byte (page number 02h, byte 0), the first bit of the following one byte (page number 02h, byte 1) is used as EAS for theft prevention, and the remaining system area is used as a reserved area.

Page number 03h and the later provide a user area that can be used by an engineer of the library, etc., as desired. Specifically, the book data of the title, classification, author, etc., of the book (article data) is stored as user data.

The value of the EAS is stored in the least significant bit (LSB) of byte 1 of page number 02h as shown in FIG. 6B, and the remaining seven bits are used as the reserved area as described above.

The AFI area is used as it is separated into high-order four bits and low-order four bits as shown in FIG. 6C. The high-order four bits are always fixed to "8" and 1 is stored in the low-order four bits upon completion of return processing or 2 is stored upon completion of lending processing, as shown in Fig. 6D. The high-order four bits of the AFI are based on the standard of JIS X 6323-3 (ISO/IEC15693-3), and 8 in the high-order four bits is defined as a numeric value for use with "transportable file." It is used in the library system.

According to the described configuration, appropriate access to necessary information in the system area is facilitated and general versatility and applicability are provided in the user area. Since lending processing data and return processing data are stored as eight-bit data in the AFI, the RF tag 30 attached to the book for which lending processing is not complete can be detected in the exit interrogator 10 (FIG. 1) with high accuracy.

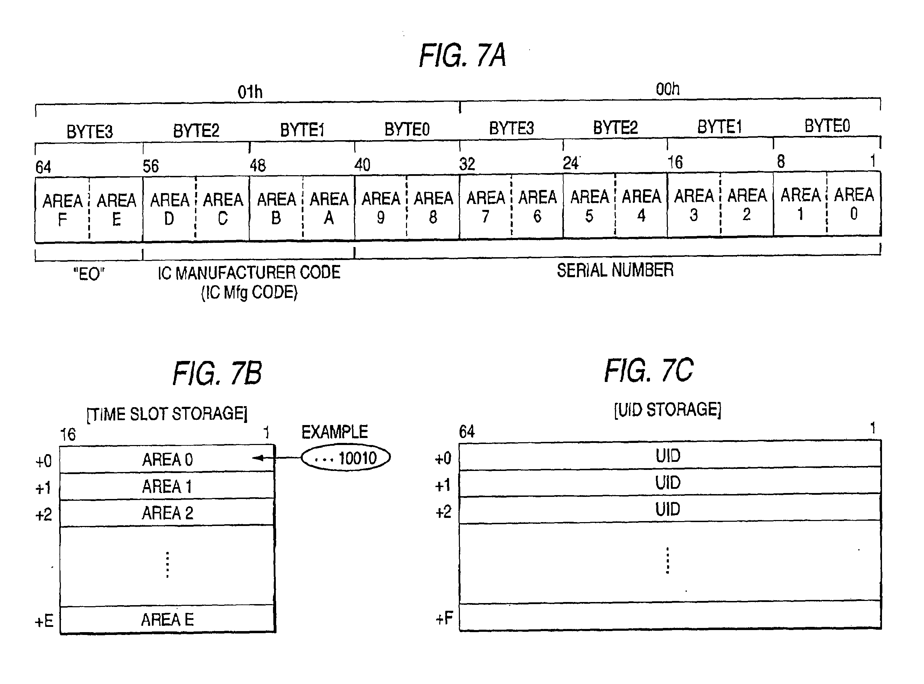

Next, the UID data stored in the RF tag 30 and data storage when the interrogator reads the UID (storage in the memory of the communication controller 40) will be discussed with FIGS. 7A-7C, which is a schematic representation.

FIG. 7A indicates the data structure of the UID. The UID contains 16 areas of area 0 to area F (hexadecimal notation) with four bits set as one area.

The serial number of the RF tag 30 is set in area 0 to area 9, the IC manufacturer code (IC Mfg Code) is set in area A to area D, and EO is set in areaE and area F. The IC manufacturer assigns the unique serial numbers to all RF tags 30.

In the UID, area data stored in each area is also used as a time slot for determining the response timing of the transmission timing of a response signal. For example, if the data stored in area 0 is "0001" (binary notation) , the RF tag 30 responds at the second timing (which is called slot 2). Thus, 16 response timings exist from "0000" (binary notation) as the first timing to "1111" (binary notation) as the 16th timing because one area consists of four bits.

FIG. 7B indicates the memory area (collision data storage area) of the communication controller 40 for storing collision data indicating the collision time slot if a plurality of RF tags 30 respond and response signals are transmitted at the same response timing, namely, one response data collides with another response data.

The collision data is made up of 16 bits and collision data is acquired for each UID area and is stored in the memory.

For example, assume that area 0 is used as time slot and that response data collision occurs at the second (slot 2) and the fifth (slot 5). In this case, the bit string "0000, 0000, 0001, 0010" (binary notation) is stored in the area for area 0 in the memory as shown in the example in the figure. That is, the right side (least significant bit) is the first and the left side (most significant bit) is the 16th and as the collision position, "1" is stored; otherwise, "0" is stored.

This sequence is executed for each area. This operation is described later in detail.

FIG. 7C indicates the memory area of the communication controller 40 for storing the UIDs (UID storage area). The 64-bit UIDs of the RF tags 30 that can be read without collision are stored one at a time.

As the UID configuration and the memory areas of the communication controller 40 described above are provided, multiple tag access processing described later is made possible. Accordingly, even when a plurality of RF tags 30 pass through the passage 4 (FIG. 1), it is made possible to read the UIDs of all RF tags 30 in the exit interrogators 10.

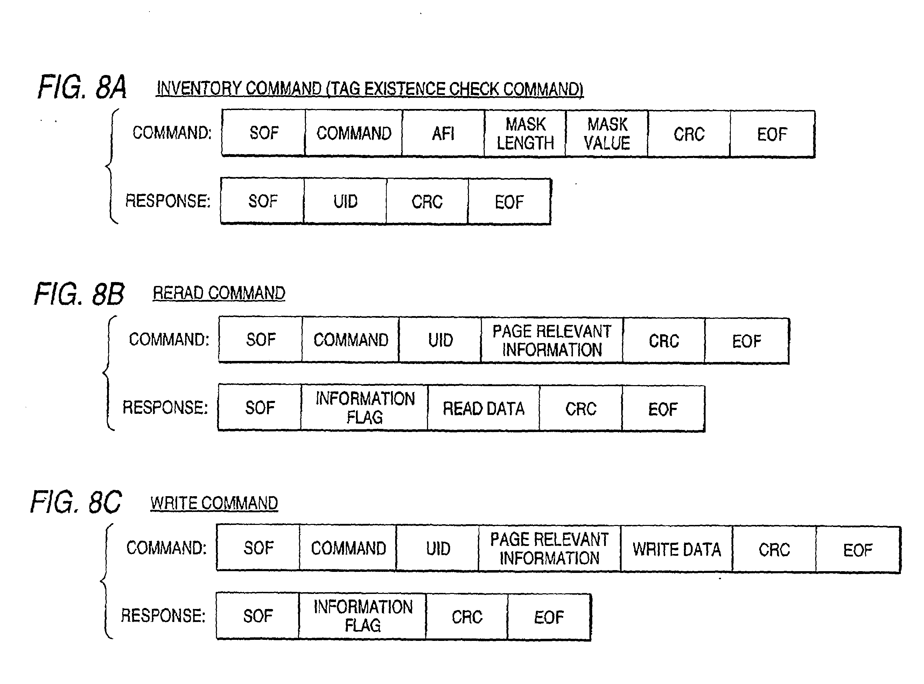

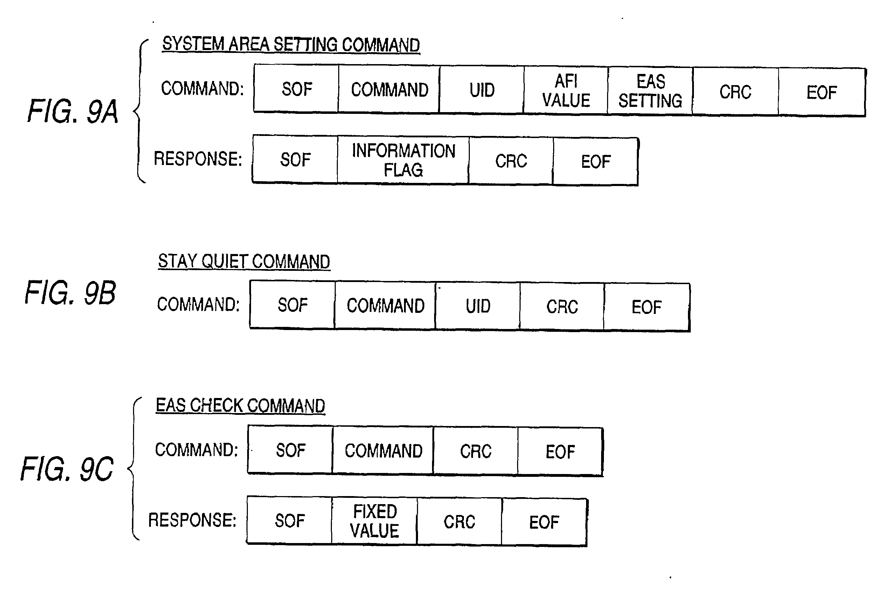

Next, command data transmitted by the interrogator such as the exit interrogator 10, the return interrogator 20, the lending interrogator 70, or a book stock interrogator (handy scanner for checking books stored on a shelf, not shown) to the RF tag 30 and response data to the command data, returned by the RF tag 30 will be discussed with FIGS. 8 and 9, which are schematic representations of the command data.

FIG. 8A indicates an inventory command for checking the RF tag 30 for existence. This command is made up of SOF (start of frame, frame start signal), command (data indicating that the command is inventory command) , AFI, mask length (bit length of UID used as mask), mask value (start position of UID used as mask), CRC (cyclic redundancy check) , and EOF (end of frame, frame end signal).

Upon reception of the inventory command, the RF tag 30 makes a response made up of SOF, UID, CRC, and EOF.

The inventory command and the response make it possible to detect the RF tag 30 of what UID exists in the communication-possible range with the interrogator.

FIG. 8B indicates a read command for reading data stored in the memory of the RF tag 30. This command is made up of SOF, command (data indicating that the command is read command) , UID, page relevant information (page number previously described in FIG. 6A); for example, 03h, etc.,), CRC, and EOF.

A response to the read command is made up of SOF, information flag (data indicatingwhetherornot an error occurs, error type, etc.,), read data (data stored in specified page number), CRC, and EOF.

The read command and the response enable the RF tag 30 of the specified UID by the interrogator to return the data stored in the memory area specified as the page relevant information to the interrogator and the interrogator to read the data. Accordingly, for example, the title, the author, etc., of the book 7 can be read.

FIG. 8C indicates a write command for storing data in the memory of the RF tag 30. This command is made up of SOF, command (data indicating that the command is write command), UID, page relevant information, write data (data to be written into the memory of the RF tag 30), CRC, and EOF.

A response to the write command is made up of SOF, information flag, CRC, and EOF.

The write command and the response make it possible to write the data into the specified memory location (location of specified page number) of the RF tag 30 of the UID specified by the interrogator. Accordingly, for example, the user data ofthebooktitle, author, etc., can be written, etc., for adding, changing, or deleting the user data.

FIG. 9Aindicates a system area set command for overwriting system area setting for update. This command is made up of SOF, command (data indicating that the command is system area set command), UID, AIF value, EAS setting, CRC, and EOF.

A response to the system area set command is made up of SOF, information flag, CRC, and EOF.

The system area set command and the response make it possible to overwrite the AFI value and the EAS setting stored in the system area of the RF tag 30 of the UID specified by the interrogator to change the system area setting. As the system area setting is changed, the operation of the RF tag 30 changes depending on the command.

FIG. 9B indicates a stay quiet command for setting the RF tag 30 so as not to make any more response. This command is made up of SOF, command (data indicating that the command is stay quiet command, by which a response is inhibited, namely, no response is made), UID, CRC, and EOF.

No response is made to the stay quiet command. That is, the RF tag 30 receiving the stay quiet command is set to no response at the point in time and therefore does not make a response.

The stay quiet command makes it possible to change the operation of the RF tag 30 of the UID specified by the interrogator so as to make no response to the subsequent commands. Accordingly, the RF tag 30 from which necessary data has already been acquired, etc., can be excluded from the processing.

Setting of the stay quiet command is effective only while an electromotive force is produced in the RF tag 30 by a magnetic field produced by the interrogator. Therefore, if the RF tag 30 exits the interrogator communication area and power is not supplied to the RF tag 30, the setting is cleared and the RF tag 30 is restored to the initial value (namely, response state) . When power is again supplied, the RF tag 30 makes a response to a command.

FIG. 9 C indicates an EAS check command for checking whether or not each book can be taken out on EAS for theft prevention. This command is made up of SOF, command (data indicating that the command is EAS check command; if EAS is "0," a response is made), UID, CRC, and EOF.

A response is made to the EAS check command only if EAS is "0." The response is made up of SOF, a fixed value (for example, data indicating that the book can be taken out or the like), CRC, and EOF.

The EAS check command makes it possible to detect passage of the RF tag 30 stuck on the book that cannot be taken out in the interrogator (particularly, exit interrogator 10) and make a notification.

The commands make it possible to perform data read, data update (addition, change, deletion), and operation change for the RF tag 30. Particularly, the inventory command makes it possible to read the UID of the RF tag 30 with the AFI being any other than "82" indicating that lending processing is complete. The EAS check command makes it possible to detect that lending processing is not complete.

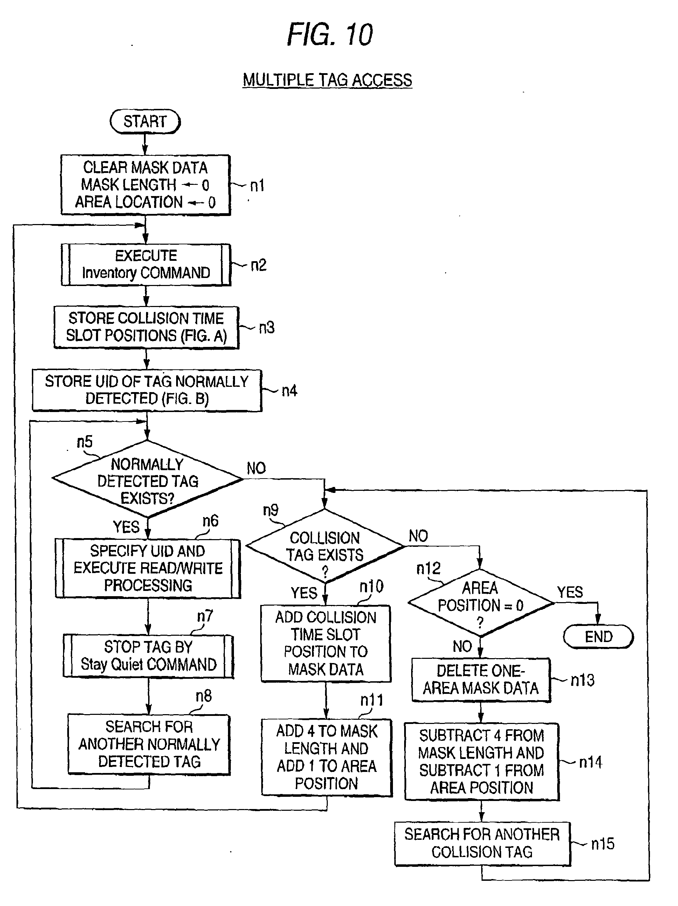

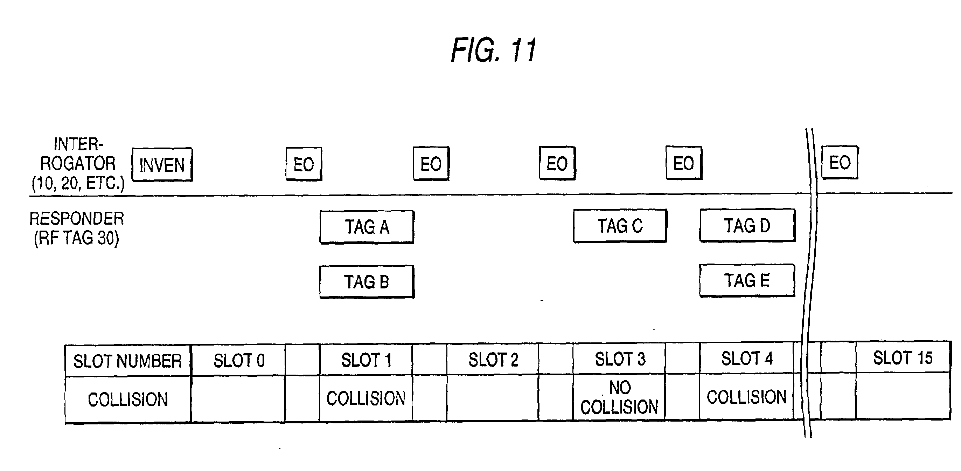

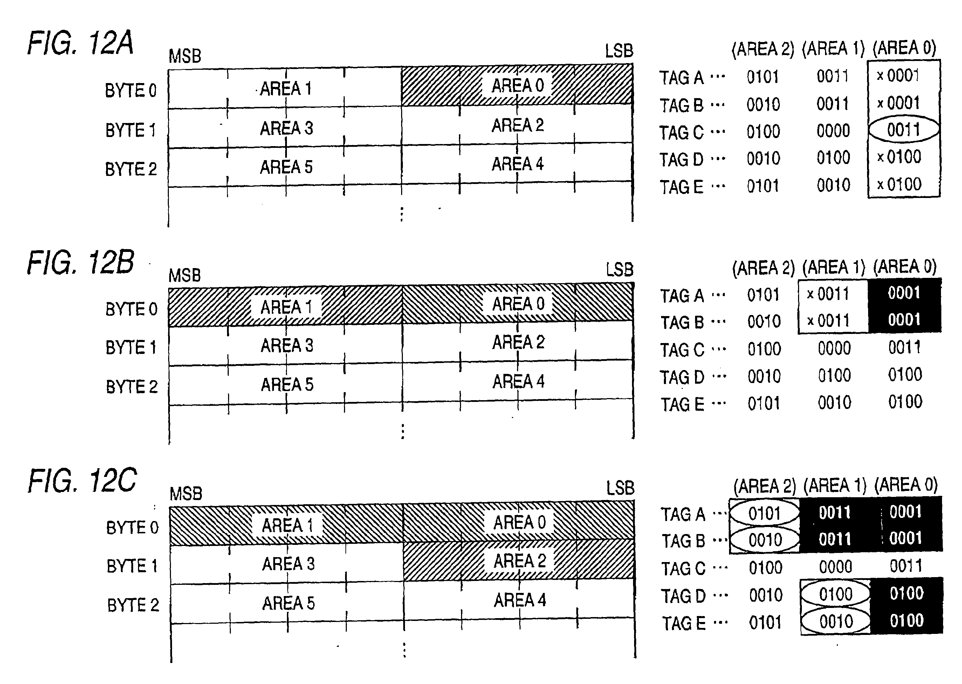

Next, multiple tag access processing (anticollision algorithm) will be discussed with reference to FIG. 10, which is a processing flowchart, FIG. 11, which is a schematic representation of response data collision, and FIGS. 12A-12C, which is a schematic representation of response processing.

The operation flowchart of FIG. 10 shows a program stored in the communication controller 40 and executed by the control section 42. Here, a typical anticollision sequence when the number of time slots is 16 will be discussed.

To begin with, the area storing mask data of the communication controller 40 (mask data area) is initialized so that the mask length data is set to 0, the mask value data is set to a predetermined value, and the area location data indicating the location of the UID stored in the RF tag 30 is set to 0 (step n1).

The interrogator transmits the inventory command previously described in FIG. 8A to a plurality of RF tags 30 (tag A, tag B, ..., tag E) in the interrogator communication area (for example, in the range sandwiched between the exit interrogators 10 and 10 shown in FIG. 1) (step n2).

At this time, since the mask length is 0, each RF tag 30 transmits the UID as a response independently to the interrogator at the self response timing determined in the UID area (here, area 0) (see FIG. 8A), as shown in FIG. 12A. The response timing varies from one RF tag 30 to another; the RF tags 30 may collide with each other (may make a response at the same timing). Here, assume that tag A collides with tag B in slot 1 and that tag D collides with tag E in slot 4, for example, as shown in FIG. 12A.

At the left of the figure, the area used as time slot of UID is hatched and the area used as mask described later is crosshatched. At the right of the figure, the UIDs stored in tags A, B, ..., E are displayed, the area used as time slot is displayed as a rectangular void frame and the area used as mask described later is displayed as fill. In the UID display, the time slot of the RF tag 30 that can be read without any collision is enclosed in an ellipse and X is displayed to the left of the collision time slot.

The control section 42 detects the collision time slot positions from the response data of each RF tag 30 and stores the detected time slot positions (namely, slots 1 and 4) in the collision data storage area (see FIG. 7B) (step n3).

The UID of the RF tag 30 that can be normally detected without any collision (namely, the UID of tag C making a response in slot 3) is stored in the UID storage area shown in FIG- 7C in order (step n4).

If normally detected RF tag 30 exists (YES at step n5) , the UID stored in the UID storage area is referenced, the RF tag 30 having the UID (here, tag C) is specified in the interrogator, and necessary processing (access) of a command such as a read command (in FIG. 8B) or a write command (in FIG. 8C) is executed (step n6). The necessary processing varies depending on which of lending processing, gate processing, return processing, and book stock inspection processing described later the multiple tag access processing is used in, and therefore is described separately in each processing.

The control section 42 transmits a stay quiet command to the RF tag 30 having the UID (namely, tag C) for stopping the operation of the tag so as not to make a subsequent response.

Accordingly, access to the RF tag 30 (tag C) at the response timing is terminated and a transition is made to a state equivalent to the state in which the RF tag 30 does not exist.

The control section 42 makes a search for another detected RF tag 30, and returns to step n5 (step n8).

If it is determined at step n5 that normally detected RF tag 30 does not exist, the contents of the collision data storage area shown in FIG. 7B are referenced and whether or not a collision occurred is determined (step n9).

If a collision occurred, the first time slot position data of the collision occurrence time slots (in this case, slot 2 "0001") is fetched and stored as mask data (step n10).

The control section 42 adds four to the mask length and adds one to the area position and then returns to step n2 (step n11). Here, the mask length is 0 until just before and thus becomes four bits and area 1 of UID (see FIG. 12B) is selected as the position data specifying the next time slot.

When the control section 42 thus returns to step n2, the next inventory command to be executed differs from the previous inventory command; the mask length is updated to four, the mask value is updated to 0001, and the area position of UID is updated to area 1.

The inventory command thus updated is executed. At this time when collision tag exists, the value indicating one collision (0001) is entered as mask and therefore a plurality of RF tags 30 always exist. That is, processing is applied only to the RF tags 30 having the UIDs with area 0 being "0001" as shown in FIG. 12B and thus two or more RF tags 30 should exist if they collided.

However, the area position of the UID specifying the timing at which the RF tag 30 makes a response differs from the previous one. Thus, as the processing sequence is repeated, the possibility that a collision will again occur is lowered. For example, if tags A and B also collide with each other in the time slot in area 1 as shown in FIG, 12B, they do not collide in the time slot in area 2 as shown in FIG. 12C, so that the UIDs of tags A and B can be acquired.

When the processing sequence of steps n2 to n11 is thus repeated and collision slots run out at step n9, then processing of restoring the area position is executed at steps n12 to n14 to cover missing processing when a collision occurs in plurality of slots at the same area position.

If the area position is not 0 (NO at step n12), the control section 42 deletes one-area mask data (step n13). The control section 42 subtracts four from the mask length and subtracts one from the area position (step n14) and makes a search for another collision RF tag 30 (step n15).

If the area position is 0 (YES at step n12), the processing is terminated.

In the processing at steps n12 to n15, if the mask length is 8 and the area position is 2, for example, as shown in FIG. 12C, the mask length is restored to 4 and the area position is restored to 1 and another collision is detected, whereby another collision between tags D and E can be detected. That is, if the processing of restoring the area position is not performed, theUIDs of tagsAandBare acquired and the processing is terminated. However, the area position is restored in order, whereby it is made possible to also acquire the UIDs of tags D and E of another collision. Here, the UIDs of tags D and E can be acquired at the slot timing in area 1.

Thus, if a plurality of RF tags 30 exist within the interrogator communication area, the UIDs of all RF tags 30 can be acquired reliably and it is made possible to perform the necessary processing of command execution, etc. That is, if the multiple tag access processing is built in gate processing executed in the exit interrogator 10, even if a plurality of books 7 are illegally taken out from the passage 4 (FIG. 1), the UIDs can be read in the exit interrogator 10 from the RF tags 30 of the books 7. Accordingly, it is made possible to identify all taken-out books 7. The gate processing in which the multiple tag access processing is built is described later in detail.

Even if a plurality of returned books 7 are input to the return slot 5 with the books 7 piled, if the multiple tag access processing is built in return processing executed in the return interrogator 20, the UIDs of the RF tags 30 of the books 7 can be read in the return interrogator 20. Accordingly, it is made possible to automatically identify the returned books 7. The return processing in which the multiple tag access processing is built is also described later in detail.

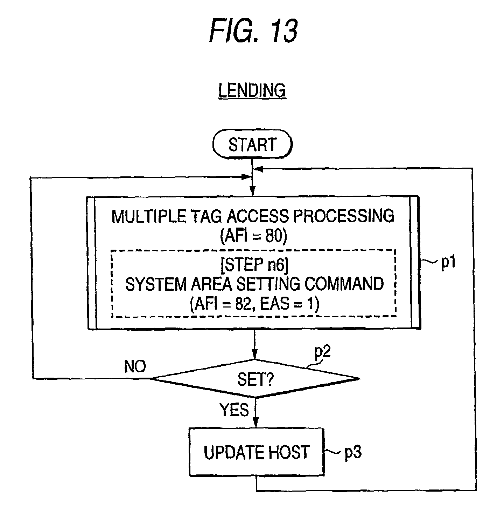

Next, lending processing executed based on firmware in the control section 42 of the communication controller 40 (not shown) connected to the lending interrogator 70 will be discussed with FIG. 13, which is a processing flowchart.

When the user of the library passes a book 7 to an official in charge on the lending counter 6, the official in charge places the book 7 with the book 7 piled on the lending interrogator 70. In this state, the RF tag 30 of the book 7 is positioned in the communication area of the lending interrogator 70 and a communication-possible state is entered, making possible the following lending processing:

The control section 42 executes the above-described multiple tag access processing (step p1). Here, when an inventory command is executed in the multiple tag access processing, it is executed with AFI=80. If the AFI is thus set to 80, every RF tag 30 with the AFI having a value ranging from 81 to 89 makes a response. That is, "0" in the low-order four bits of the AFI is used as a value indicating "ALL."

As the necessary processing at step n6, a system area setting command is executed as AFI=82, EAS=1. Accordingly, every RF tag 30 in the communication area is set to lending processing completed as AFI and no response as EAS, so that when the books 7 pass through the passage 4 (FIG. 1), the return interrogator 20 does not detect the books passing through.

Upon completion of the multiple tag access processing, the control section 42 determines whether or not setting is conducted by the system area setting command (step p2) and if setting is not conducted, the control section 42 returns to step p1.

If setting is conducted, the control section 42 transmits the UID of the setup RF tag 30 and the contents of the system area setting command to the host 60 for updating the book data managed by the host 60 (step p3). As the book data is updated, management can be executed as to whether or not each book stocked in the library is being lent or exceeds the expiration date.

Upon completion of updating the book data managed by the host 60, the control section 42 returns to step p1 and repeats the lending processing.

As the operation is performed as described above; the RF tag 30 attached to the book 7 can be set to a state in which the book 7 can be taken out, namely, lending processing completed, so that if the book 7 passes through the passage 4 (FIG. 1), it is made possible for the exit interrogator 10 not to detect the book 7 being illegally taken out.

If an identity radio IC card installing the IC chip 32 is issued to the user, the user data stored on the identity radio IC card may be read by radio communications in the lending processing.

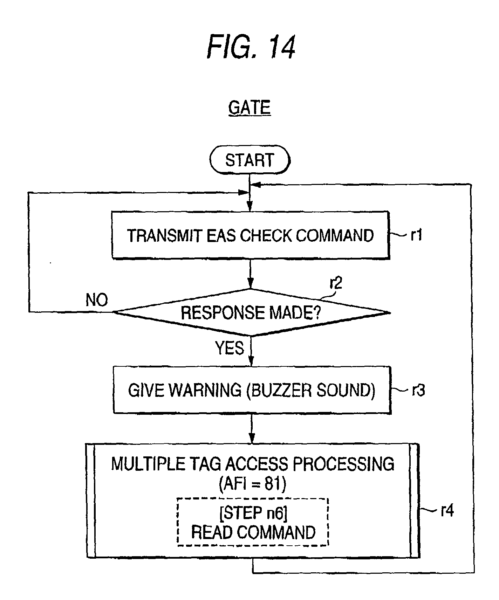

Next, gate processing executed based on firmware by the exit interrogator 10 installed in the passage 4 will be discussed with FIG. 14, which is a processing flowchart.

The control section 42 transmits an EAS check command to check whether or not a book 7 for which lending processing is not performed (e=0) exists, namely, whether or not the RF tag 30 makes a response (step r1).

In the EAS check command, every RF tag 30 makes the same response. Thus, if a plurality of RF tags 30 exist in the communication area of the exit interrogator 10, their responses can be received without conducting any special procedure. That is, the same data is returned at the same timing, so that if the data overlaps, it does not crash and can be taken out in the exit interrogator 10.

If no response is made, the control section 42 returns to step r1 and repeats transmission of the EAS check command (step r2).

If a response is made, the control section 42 produces a buzzer sound in the buzzer/display section 47 of the communication controller 40 for making a notification (step r3) and executes the multiple tag access processing (step r4).

Here, when an inventory command is executed in the multiple tag access processing, it is executed with AFI=81. That is, the RF tag 30 set to the return processing completed state without undergoing lending processing is accessed.

As the necessary processing at step n6, a read command is executed for reading the data stored in the RF tag 30. The read data at this time is the data of the book title, author, etc., because the UID is already acquired in the multiple tag access processing described above.

Upon completion of the multiple tag access processing, the control section 42 returns to step r1 and repeats checking as to whether or not each book is illegally taken out.

As the operation is performed as described above, if the book 7 is illegally taken out, the RF tag 30 of the taken-out book 7 can be accessed for keeping track of the UID, the title, etc., of the book 7. Accordingly, if the user of the library illegally takes out the book 7 without being aware of it because a failure of the buzzer/display section 47 or the user wears portable headphones, etc., it is made possible to precisely keep track of the taken-out book 7 and restock the book 7 in some cases.

Since the multiple tag access processing is executed with AFI=81 in the gate processing, the RF tags 30 making a response are also limited and the processing time can be shortened drastically; while a person normally walks and passes through the gate, the UID of the RF tag 30 and the data of the book title, etc., can be acquired.

If the UID of the RF tag 30 and the data concerning the RF tag 30 (book title, etc.,) are linked in the host 60 for management, even if only the UID is acquired, the corresponding book 7 can be identified and the read command at step n6 can be skipped for furthermore shortening the processing speed.

If the user of the library runs through the gate and the UID and tag information cannot be acquired, detection based on EAS check is complete and thus it is possible to give a warning of illegal taking out like the normal EAS gate.

The gate processing may be set so as to repeat multiple tag access processing with AFI set to 81 without executing the EAS check command (step r1, step r2).

In this case, if the processing time taken only for checking whether or not each book is illegally taken out is compared with repeating the EAS check command, the processing time is prolonged. However, it is sufficient processing time as the detection time; more reliable detection can also be conducted by changing the installation state in such a manner that the passage 4 is set like a letter L or U or an automatic door is installed at the exit for allowing the user of the library to exit only if he or she once stops in the communication area of the exit interrogator 10, for example.

To use the identity radio IC card described above, it is also possible to perform user data read processing in the gate processing for identifying the user illegally taking out a book. In this case, also considering the user who only reads the book 7 and leaves the library, in the identity radio IC card state, EAS is always set to 1 for making no response to the EAS check command at the gate. However, AFI is always set to 81 as incomplete lending processing for also reading the data on the identity radio IC card in the gate processing.

Accordingly, a warning of illegal taking out is executed in the buzzer/display section 47 (FIG. 4), the data on the identity radio IC card is acquired each time the user passes through the passage 4, and the data on the identity radio IC card and the data of the book 7 can be linked only if the book 7 is illegally taken out.

Warning at step r3 may be set after the multiple tag access processing at step r4 terminates, and EAS may be provided only for starting the multiple tag access processing. In this case, whether or not the RF tag 30 of an illegally taken-out book exists may be determined using AFI in the multiple tag access processing and only if the RF tag 30 exists, the warning process (step r3) may be executed. Accordingly, the most of highly accurate detection based on eight-bit data can be made for warning and erroneous detection of EAS can be overcome.

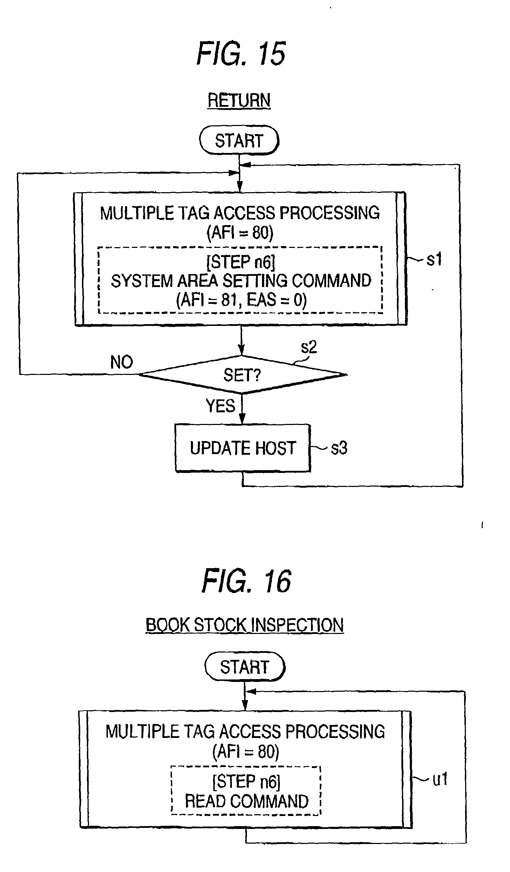

Next, return processing executed based on firmware in the control section 42 of the communication controller 40 (not shown) connected to the return interrogator 20 (automatic return processing) will be discussed with FIG. 15 which is a processing flowchart.

When the user of the library returns a book 7 through the return slot 5 shown in FIG. 2, the book 7 slides on the slope 8 and passes through the communication area of the return interrogator 20. The following processing is made possible while the book 7 passes through the communication area:

The control section 42 executes the above-described multiple tag access processing (step p1). Here, when an inventory command is executed in the multiple tag access processing, it is executed with AFI=80 to apply processing to all RF tags 30 regardless of whether or not the lendingprocessing is complete.

As the necessary processing at step n6, a system area setting command is executed as AFI=81, EAS=0. Accordingly, every RF tag 30 in the communication area is set to return processing completed as AFI and response as EAS, so that when the books 7 pass through the passage 4 (FIG. 1), the return interrogator 20 detects the books passing through.

Upon completion of the multiple tag access processing, the control section 42 determines whether or not setting is conducted by the system area setting command (step s2) and if setting is not conducted, the control section 42 returns to step sl.

If setting is conducted, the control section 42 transmits the UID of the setup RF tag 30 and the contents of the system area setting command to the host 60 for updating the book data managed by the host 60 (step s3).

Upon completion of updating the book data managed by the host 60, the control section 42 returns to step s1 and repeats the return processing.

As the operation is performed as described above, the management state of the book 7 indicating lending as the book data managed in the host 60 can be changed to returned, namely, readable, lendable state by automatic processing without intervention of a human being. When the book data is updated in the host 60, returning of a book 7 in the readable, lendable state (unlent state), namely, returning of an illegally taken-out book 7 can also be detected.

In the described return processing, updating of the book data in the host 60 is performed after AFI and EAS in the RF tag 30 are set. However, AFI and EAS in the RF tag 30 may be set after the book data in the host 60 is updated. In this case, the operation can also be set so as to skip setting of AFI and EAS in the RF tag 30 for an unlent book.

The official in charge may execute the return processing on a return counter (not shown) similar to the lending counter 6 (FIG. 1). In this case, an interrogator similar to the lending interrogator 70 may be installed as the return interrogator 20.

Next, the above-described multiple tag access processing can also be used in book stock inspection processing and this book stock inspection processing (processing executed based on firmware with a handy scanner) will be discussed with FIG. 16, which is a processing flowchart. The book stock inspection is conducted once or twice a year to find unknown books and match with a database (book data in the host 60).

The control section 42 of the communication controller 40 connected to the handy scanner executes the multiple tag access processing (step ul) . Here, when an inventory command is executed in themultiple tag access processing, it is executed with AFI=80.

As the necessary processing at step n6, a read command is executed for reading the data of book title, etc.

As the multiple tag access processing is repeated and the official in charge moves the handy scanner along the books 7 on each shelf, the data of the books 7 stored on the shelf is read in order.

As the described operation is performed, a book actually lost although it exists on the data base or different in location (storage shelf) can be detected.

The embodiment has been described based on the multiple tag access processing. Simple tag access processing for making it possible to perform high-speed processing as the multiple tag access processing is simplified will be discussed as another embodiment.

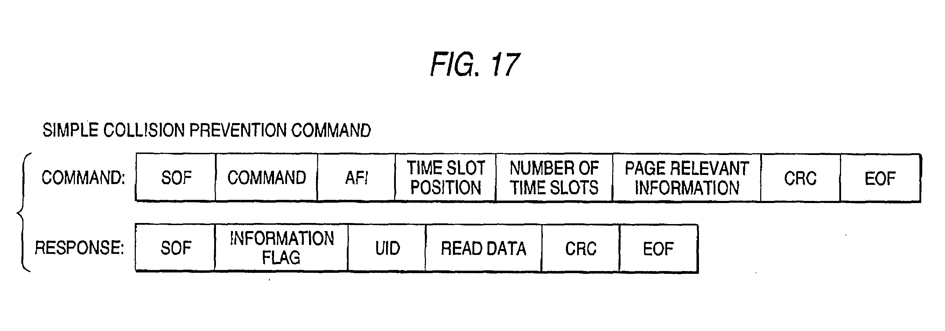

A simple collision prevention command and its response will be discussed with FIG. 17, which is a schematic representation of command data.

The simple collision prevention command is a simple inventory command for checking an RF tag 30 for existence. This command is made up of SOF, command (data indicating that the command is simple collision prevention command), AFI, time position (area position used as time slot), number of time slots (area length used as time slots, bit units), page relevant information, CRC, and EOF.

The RF tag 30 receiving the simple collision prevention command makes a response, which is made up of SOF, information flag, UID, read data, CRC, and EOF.

The simple collision prevention command and the response make it possible to detect the RF tag 30 of what UID exists in the communication-possible range with the interrogator.

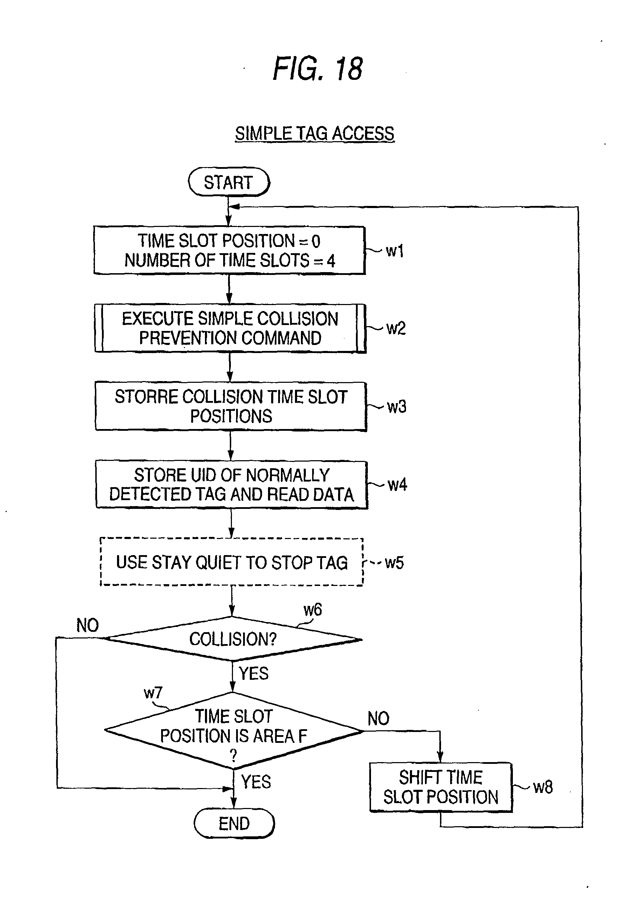

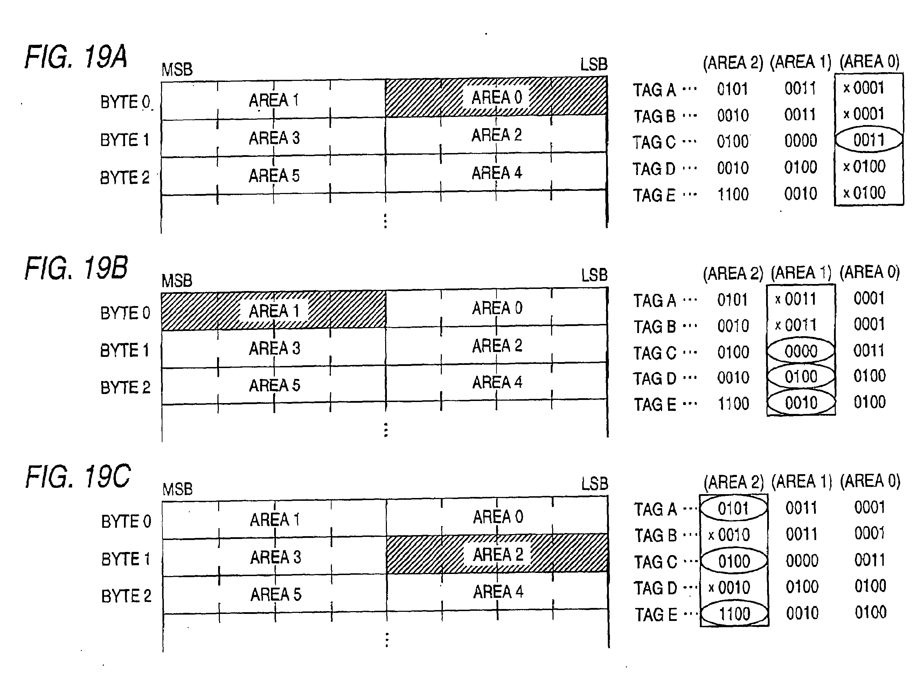

Next, simple tag access processing will be discussed with FIG. 18, which is a processing flowchart, and FIGS. 19A-19C, which is a schematic representation of response processing.

To begin with, the area storing the time slot data of the communication controller 40 (time slot data area) is initialized as the time slot position is set to 0 and the number of time slots is 4 (four bits) (step w1).

The control section 42 of the communication controller 40 executes the simple collision prevention command (FIG. 17) (step w2). Here, assuming that the four bits of area 0 are used as a time slot as shown at the left of FIG. 19A, for example, tags A and B collide and tags D and E collide and tag C does not collide.

The control section 42 stores collision occurring time slots (second: 0001, fourth: 0011) in the collision data storage area previously described in FIG. 7B (step w3).

The UID of the normally detected RF tag 30 (namely, tag C) and the read data are stored in the memory of the communication controller 40 (step w4).

A stay quiet command (FIG. 9B) is transmitted for causing the RF tag 30 having the UID acquired to make no response (step w5).

If a collision occurs (YES at step w6), whether or not the current time slot position is area F, namely, repetition end condition is determined (step w7).

If the time slot position is not area F, the time slot position is moved one (namely, area 0 is used at present and thus area 1 is next used) and a return is made to step w2 (w8).

The processing is thus repeated until a collision does not occur or the end of UID (area F) is used as time slot. In the example in FIGS. 19A-19C, tags C, D, and E can be read without any collision as shown in FIG. 19B in the second processing.

In the third processing, tags A, C, and E can be read without any collision as shown in FIG. 19C. That is, at the point in time, the UIDs of tags A, C, D, and E and the read data can be acquired.

According to the described simple tag access processing, data acquisition of UID, etc., can be executed at higher speed than the multiple tag access processing. That is, the mask processing and the return processing performed in the multiple tag access processing are excluded and the simple tag access processing is complete as irreversible processing in one direction. Although processing of advancing area, returning, and again advancing is repeated in the multiple tag access processing, the repetition is excluded for drastically decreasing the number of loops in the simple tag access processing.

If the simple tag access processing is repeated to the end, namely, from area 0 to area F, logically there is a possibility that a collision will occur. This is also clear from the fact that the UID of tag B cannot be acquired in the third processing previously described in FIG. 19C.

However, for example, the number of books 7 passing through the communication area of the exit interrogator 10 or the communication area of the return interrogator 20 is physically small and therefore the possibility of a collision is low. That is, the number of books 7 passing through the communication area of the exit interrogator 10 is within the range of the number of books that can be held by the user, and the number. of books 7 passing through the communication area of the return interrogator 20 is within the range of the number of books that can be input at a time from the return slot 5.

Therefore, if 16 response timings exist and 16 repetitions are made by changing the response timing (changing the area) as described in the embodiment, the possibility that an RF tag 30 that cannot yet avoid a collision may exist is extremely low and can be ignored practically.

As described above, it is made possible to complete data acquisition from a plurality of RF tags 30 in the communication area at high speed, automatically read the RF tags of the books 7 taken out from the library of the management area and the RF tags of the books 7 returned through the return slot 5 to the library, and manage the books 7 in the library with high accuracy.

The simple tag access processing makes it possible to communicate with the RF tag 30 reliably in high-speed processing and acquire the UID, etc., of the RF tag 30 of each illegally taken-out book without forming the passage 4 like a letter L or U.

To use the simple tag access processing rather than the multiple tag access processing in the lending processing, the gate processing, the return processing, or the book stock inspection processing described above, the command executed at step n6 may be executed at step w4.

In the simple tag access processing, the time slot position is moved one area at a time, but may be moved bitwise as one bit at a time, two bits at a time, or eight bits at a time. Accordingly, the number of repetitions executing a simple collision prevention command can be increased or decreased.

In the simple tag access processing, the number of time slots is set to four bits, but may be set regardless of the number of area bits in such a manner that it is set to two or eight bits. Accordingly, the number of the response timing types can be increased or decreased.

The exit 2 may be a gateway (serving both as an entrance and an exit) and the passage 4 may serve both as an exit passage and an entrance passage.

In addition to the exit interrogator 10, the return interrogator 20maybe connected to the communication controller 40 (FIG. 1) to which the exit interrogator 10 is connected. Accordingly, the number of the communication controllers 40 can be decreased one, leading to a reduction in cost.

A switch may be attached to the connection line connecting the communication controller 40 (FIG. 1) and the exit interrogator 10 and the switch and the return interrogator 20 may be connected. In this case, when the library is open, the return slot 5 is closed and only the exit interrogator 10 is operated. After the library is closed, the switch can be switched so as to operate the return interrogator 20 and stop the exit interrogator 10. Accordingly, the number of the communication controllers 40 can be decreased one, leading to a reduction in cost, and the operating device can be switched between the library open time and closed time simply with the switch; the work efficiency can be enhanced.

Three or more exit interrogators 10 may be disposed side by side. In this case, any exit interrogator 10 except at both ends may include a communication face 10a on both left and right sides so as to be able to conduct communications on both sides.

The correspondence between the components of the invention and the embodiment described above is as follows:
The article management system of the invention corresponds to the book management system 1 of the embodiment. Likewise, the passage section corresponds to the passage 4 and the slope 6;
   the article corresponds to the book 7;
   the passage radio communication unit corresponds to the exit interrogator 10 and the return interrogator 20;
   the noncontact electronic tag corresponds to the RF tag 30; the computer-readable medium corresponds to the ROM;
   the user radio electronic medium corresponds to the identity radio IC card;
   part of predetermined data corresponds to any one of areas 0 to F;
   the tag data corresponds to the UID;
   the response data corresponds to response:
   the specification data corresponds to the mask length and the mask position or the time slot position and the number of time slots;
   the user data corresponds to the user data;
   the inhibition detection-possible data corresponds to AFI and EAS;
   the application family identifier corresponds to AFI;
   the tag access processing corresponds to the multiple tag access
   processing and the simple tag access processing;
   the interrogation communication processing corresponds to the gate processing or the return processing;
   the conditional processing corresponds to step r2, step r3; the limitation condition corresponds to step w7;
   the repetitive processing corresponds to step n11, n14, or step w8;
   the user identification processing corresponds to the user data read processing;
   the article management program corresponds to the multiple tag access program, the simple tag access program, the lending program, the gate program, the return program, or the book stock inspection program; and
   the management area corresponds to the inside of the library. However, the invention is not limited to the specific configuration of the embodiment described above and can be embodied as a large number of modifications.

## Claims

1. An article management system wherein a noncontact electronic tag storing tag data is attached to an article to be managed in a management area, the system comprising:
a passage radio communication unit disposed in a passage section leading to the management area, the passage radio communication unit communicating with the noncontact electronic tag attached to the article passing through the passage section, and executing tag access processing to read the tag data stored in the noncontact electronic tag.

2. The article management system as claimed in claim 1, wherein the tag access processing includes:
interrogation communication processing of setting a part of predetermined data stored in the noncontact electronic tag as reference for determining a response timing for causing the noncontact electronic tag to transmit response data and transmitting specification data specifying the part of the predetermined data; and
repetitive processing of changing a specification position in the specification data and again executing the interrogation communication processing when one piece of response data transmitted from a plurality of noncontact electronic tags at the same response timing and received by the passage radio communication unit collides with another.

3. The article management system as claimed in claim 2, wherein a limitation condition is set for terminating repetition of the repetitive processing regardless of whether or not collision avoidance is accomplished.

4. The article management system as claimed in claim 1, wherein the noncontact electronic tag stores inhibition detection-possible data indicating permission or inhibition of passage through the passage section, and wherein the passage radio communication unit executes the tag access processing when the passage radio communication unit detects the noncontact electronic tag attached to the article whose inhibition detection-possible data indicates inhibition of passage through the passage section.

5. The article management system as claimed claim 1, further comprising:
a user radio electronic medium capable of identifying each user and storing user data, the user radio electronic medium communicating with the passage radio communication unit,
wherein the passage radio communication unit is set to receive the user data from the user radio electronic medium.

6. The article management system as claimed in claim 1, wherein the tag data is article-unique data capable of identifying each article, and includes at least one of unique ID given for each noncontact electronic tag and article data.

7. The article management system as claimed in claim 1, wherein the tag access processing includes at least one of access processing of transmitting an interrogation signal to the noncontact electronic tag and receiving a response signal from the noncontact electronic tag, multiple tag access processing of transmitting an interrogation signal to a plurality of noncontact electronic tags and receiving a response signal while reliably circumventing a collision, and simple tag access processing of transmitting an interrogation signal to a plurality of noncontact electronic tags and receiving a response signal while circumventing a collision to some extent.

8. A noncontact electronic tag storing inhibition detection-possible data indicating permission or inhibition of passage through the passage section as an application family identifier.

9. An article management method using a noncontact electronic tag storing tag data which is attached to an article to be managed in a management area, the method comprising:
communicating with the noncontact electronic tag attached to the article passing through a passage section leading to the management area; and
executing tag access processing to read the tag data stored in the noncontact electronic tag.

10. The article management method as claimed in claim 9, wherein the tag access processing includes:
interrogation communication processing of setting a part of predetermined data stored in the noncontact electronic tag as reference for determining a response timing for causing the noncontact electronic tag to transmit response data and transmitting specification data specifying the part of the predetermined data; and
repetitive processing of changing a specification position in the specification data and again executing the interrogation communication processing when one piece of response data transmitted from a plurality of noncontact electronic tags at the same response timing and received by the passage radio communication unit collides with another.

11. The article management method as claimed in claim 9, wherein the tag access processing is executed for the noncontact electronic tag attached to the article whose passage is inhibited.

12. The article management method as claimed claim 9, further comprising:
communicating with a user radio electronic medium capable of identifying each user and storing user data to receive the user data from the user radio electronic medium.

13. A computer-readable medium storing instructions for operating an article management system wherein a noncontact electronic tag storing tag data is attached to an article to be managed in a management area, said instructions comprising;
communicating with the noncontact electronic tag attached to the article passing through a passage section leading to the management area; and
executing tag access processing to read the tag data stored in the noncontact electronic tag.

14. The computer-readable medium storing instructions for operating an article management system as claimed in claim 13, wherein the tag access processing includes:
interrogation communication processing of setting a part of predetermined data stored in the noncontact electronic tag as reference for determining a response timing for causing the noncontact electronic tag to transmit response data and transmitting specification data specifying the part of the predetermined data; and
repetitive processing of changing a specification position in the specification data and again executing the interrogation communication processing when one piece of response data transmitted from a plurality of noncontact electronic tags at the same response timing and received by the passage radio communication unit collides with another.

15. The computer-readable medium storing instructions for operating an article management system as claimed in claim 13, wherein the tag access processing is executed for the noncontact electronic tag attached to the article whose passage is inhibited.

16. The computer-readable medium storing instructions for operating an article management system as claimed in claim 13, said instruction further comprising:
communicating with a user radio electronic medium capable of identifying each user for user and storing user data to receive the user data from the user radio electronic medium.
